# EUROPÄISCHE PATENTSCHRIFT

(11) **EP 2 186 068 B1**
(45) Veröffentlichungstag und Bekanntmachung des Hinweises auf die Patenterteilung: **25.05.2011**
(21) Anmeldenummer: 08801882.5
(22) Anmeldetag: 05.09.2008
(51) Int. Cl.: G07F 17/32

(54) **ELEKTRONISCHES SPIELGERÄT**
ELECTRONIC GAMES APPARATUS
APPAREIL DE JEU ÉLECTRONIQUE

(30) Priorität: 07.09.2007 DE 102007042632
(43) Veröffentlichungstag der Anmeldung: 19.05.2010
(73) Patentinhaber: Novomatic AG, 2352 Gumpoldskirchen (AT)
(72) Erfinder: GRAF, Johann, F., A-2352 Gumpoldskirchen (AT); GAWEL, Marek, A-2514 Traiskirchen (AT); LEGAT, Alexander, A-1100 Wien (AT)
(74) Vertreter: Thoma, Michael
(86) Internationale Anmeldenummer: PCT/EP2008/007289
(87) Internationale Veröffentlichungsnummer: WO 2009/033615

(56) Entgegenhaltungen:
- EP-A- 1 865 473
- WO-A-2005/041139
- WO-A-2008/057588
- US-A1- 2002 065 132

## Beschreibung

Die vorliegende Erfindung betrifft ein Spiel- und/oder Unterhaltungsgerät, insbesondere in Form eines münz- und/oder geldwertmäßig betätigbaren Glücksspielautomaten und/oder Wettgeräts, mit mehreren Bildschirmen zur Darstellung von Informationen, insbesondere von Spielinhalten und/oder Spielinformationen, die zu einem Gerätebedienplatz hin ausgerichtet sind, sowie einer Steuereinrichtung zur Ansteuerung der Bildschirme und/oder Steuerung von Spielabläufen.

Derartige Spielgeräte können beispielsweise elektronisch ausgebildete Walzenspielautomaten bilden, bei denen in den Sichtfenstern der Anzeigefelder mehrere rotierende Walzen mit verschiedenen Spielsymbolen rotierend dargestellt werden und ein Spielgewinn ausgegeben wird, wenn die Walzen mit gleichen Spielsymbolen entlang einer Gewinnlinie stehen bleiben. Unterhalb der Bildschirme ist dabei etwa auf Bauchhöhe des vor dem Spielgerät stehenden Spielers ein Bedienpaneel mit mehreren Bedientasten vorgesehen, die von Hand betätigbar sind und u.a. dazu dienen, die rotierenden Walzen in Betrieb zu setzen und/oder diese anzuhalten. Um bei derartigen Spielgeräten den Spielanreiz zu erhöhen, wurde bereits vorgeschlagen, mehrere Bildschirme einzubauen, um verschiedene Spiele gleichzeitig ablaufen lassen zu können, oder zusätzlich zu einem laufenden Spiel weitere Informationen wie beispielsweise über andere Spielmöglichkeiten des Geräts oder den Stand anderer Wettspiele darstellen zu können, so dass der Spieler während weniger anregender Spielabschnitte zusätzliche Unterhaltung vom jeweils anderen Bildschirm gewinnen kann.

Ein Spielgerät der eingangs genannten Gattung ist beispielsweise aus der WO 2005/041139 A1 bekannt, bei dem die Anzeigevorrichtung zwei großflächige, zueinander geneigte Bildschirme umfasst, auf denen mit dem Spielgerät zu spielende Spiele angezeigt werden können. Auch hier ist unterhalb der aus Bildschirmen bestehenden Anzeigevorrichtung ein Bedienpaneel mit einer Mehrzahl von Bedientasten vorgesehen, die von Hand betätigbar sind und verschiedene Spielfunktionen bzw. -parameter steuern und u.a. eine Starttaste zum Ingangsetzen eines Spiels umfassen.

Bei derartigen Spielgeräten wurde auch bereits vorgeschlagen, mehr als zwei Bildschirme zu verwenden, um den Spielanreiz weiter zu erhöhen. Die Bildschirmanzahl kann jedoch bei gegebener Gesamtgröße des Gerätegehäuses nicht beliebig erhöht werden. Zudem wird bei Anordnung von Großbildschirmen das insgesamt zu überblickende Sichtfeld recht groß, was nicht mehr ohne weiteres entspannt und ohne Hin- und Herschauen gleichzeitig wahrnehmbar ist und letztlich nicht nur zu einer körperlichen Ermüdung des Spielers führen, sondern auch ein Nachlassen des Spielanreizes und der Konzentration mit sich bringen kann. Zudem sind bei Glücksspielautomaten mit mehreren übereinander angeordneten Großbildschirmen die gleichzeitig ablaufenden mehreren Spiele in der durch das genannte Bedienpaneel vorgegebenen Spielerposition nicht optimal verfolgbar.

Der vorliegenden Erfindung liegt daher die Aufgabe zugrunde, ein verbessertes elektronisches Spielgerät, insbesondere Glücksspiel- und/oder Wettgerät zu schaffen, das Nachteile des Standes der Technik vermeidet und Letzteren in vorteilhafter Weise weiterbildet. Insbesondere soll bei begrenzter Gerätegröße ein erhöhter Spielanreiz erreicht werden, ohne dies mit Ermüdungs- oder Konzentrationsprobleme zu erkaufen.

Diese Aufgabe wird erfindungsgemäß durch ein Spiel- und/oder Unterhaltungsgerät gemäß Anspruch 1 gelöst. Bevorzugte Ausgestaltungen der Erfindung sind Gegenstand der abhängigen Ansprüche.

Es wird also vorgeschlagen, mehrere Bildschirme hintereinander gestaffelt einander überlappend anzuordnen, so dass das Sichtfenster auf zumindest einen Bildschirm hinsichtlich Format und/oder Größe hinter der tatsächlichen Bildschirmoberfläche des Bildschirms zurückbleibt, um einerseits in kompakter Anordnung eine maximale Bildschirmanzahl unterzubringen und andererseits hinsichtlich der Formate der zu verwendenden Bildschirme nicht auf das gewünschte Sichtfeld beschränkt zu sein. Erfindungsgemäß ist vorgesehen, dass zumindest einer der Bildschirme von dem Gerätebedienplatz aus betrachtet hinter zumindest einem weiteren Bildschirm teilweise verdeckt angeordnet ist. Hierdurch kann insbesondere ein hinsichtlich seines Formats üblicher Großbildschirm verwendet werden, auch wenn ein nur ein schmaler Streifen als Sichtfeld erzeugt werden soll, da der sozusagen überschüssige Rest der Bildschirmfläche hinter einem oder zwei vorderen Bildschirmen versteckt wird. Die Variabilität der zu sehenden Bildflächen an der Gerätefront erlaubt es, ohne eine Vielzahl unterschiedlicher Bildschirme vielerlei Gerätefronten mit unterschiedlichen Erscheinungsbildern abwechslungsreich zu gestalten. Die verdeckte Anordnung kann dabei nicht nur hinsichtlich der Kosten für den dritten Bildschirm vorteilhaft sein, sondern erzielt gerade auch einen sehr überraschenden Effekt hinsichtlich des Spielanreizes. Der Spieler kann erkennen, dass der verdeckte Bildschirm an sich weitergeht, wodurch ein für das menschliche Auge sehr realistisches Auftauchen von Darstellungen aus dem verdeckten Hintergrund eintritt. Der Spieler versucht sozusagen unbewusst, das verdeckte "Mehr" des Bildschirms zu sehen. Hiervon abgesehen kann durch den zusätzlichen, teilweise verdeckten Bildschirm ein weiteres Spiel oder andere interessante Informationen angezeigt werden, so dass ein zusätzlicher Unterhaltungsanreiz bei begrenzt bleibender Gerätegröße erzielt wird.

Die Hintereinanderstaffelung der Bildschirme kann grundsätzlich verschieden arrangiert und an die gewünschten Sichtfenster der Gerätefront angepasst werden. In Weiterbildung der Erfindung kann vorteilhafterweise vorgesehen sein, dass zwei Bildschirme in einer vom Gerätebedienplatz aus betrachtet vorderen Bildschirmebene übereinander angeordnet sind und der zumindest eine verdeckt angeordnete Bildschirm in einer hinteren Bildschirmebene hinter den beiden genannten vorderen Bildschirmen angeordnet ist, wobei die beiden vorderen Bildschirme voneinander beabstandet sind, so dass der hintere Bildschirm durch ein Sichtfenster zwischen den beiden vorderen Bildschirmen abschnittsweise sichtbar ist. Die Anordnung der vorderen Bildschirme in einer vorderen Bildschirmebene ist dabei nicht streng im mathematischen Sinne dahingehend zu verstehen, dass die Bildschirme parallel ausgerichtet in exakt einer mathematischen Ebene zu liegen haben - was gleichwohl vorgesehen sein kann -, sondern meint, dass in Blickrichtung vom Gerätebedienplatz aus gesehen die vorderen Bildschirme weiter zum Spieler hin und näher an der Gerätefrontseite im Wesentlichen auf demselben Abstandsniveau von der Gerätefront angeordnet sind, während der hintere, verdeckte Bildschirm tiefer im Gerätekorpus versenkt angeordnet sind. Die genannte Anordnung des verdeckten Bildschirms in einem vorzugsweise wesentlich breiteren als höheren Sichtfenster zwischen den beiden vorne liegenden Bildschirmen, deren sichtbare Oberfläche vorteilhafterweise beträchtlich größer, beispielsweise zumindest doppelt so groß, als das Sichtfenster für den hinteren Bildschirm sein kann, ergibt ein harmonisches Erscheinungsbild der Gerätefront und erlaubt es, in dem kleineren mittleren Sichtfenster, d.h. auf dem hinteren, verdeckten Bildschirm Spielinformationen oder Hintergrundinformationen anzuzeigen, die für beide Spiele, die auf den vorderen Bildschirmen laufen, Bedeutung haben können. Hierdurch kann eine gute Erfassbarkeit erreicht werden, ungeachtet dessen, ob jeweils gerade auf dem oberen oder dem unteren der beiden vorderen Bildschirme ein Spiel verfolgt wird.

Um eine gute Sichtbarkeit bezüglich aller Bildschirme vom Gerätebedienplatz aus zu erreichen, sind vorteilhafterweise zumindest zwei, vorzugsweise alle, Bildschirme zueinander stumpfwinklig geneigt angeordnet und zum Gerätebedienplatz hin unter unterschiedlichen Winkeln zur Horizontalen gekippt. Insgesamt können die Bildschirme von unten nach oben zunehmend gekippt sein, so dass zwischen jedem benachbarten Bildschirmpaar ein stumpfer Winkel gebildet ist. Nach einer vorteilhaften Ausführung der Erfindung können übereinander benachbarte Bildschirme einen Winkel zwischen 145° und 179°, vorzugsweise 165° und 175° einschließen, wobei je nach Gerätekonfiguration ggf. auch andere Bildschirmanordnungen getroffen sein können.

Besonders vorteilhafte und den Spielanreiz besonders fördernde Effekte können mit der hintereinander verdeckten Bildschirmanordnung erreicht werden, wenn in Weiterbildung der Erfindung das Sichtfenster des verdeckten Bildschirms, d.h. der nicht-verdeckte Abschnitt des hinteren Bildschirms, verändert werden kann, so dass der verdeckte Bildschirm einmal mehr und einmal weniger zu sehen ist. Hierzu ist in Weiterbildung der Erfindung das Spiel- und/oder Unterhaltungsgerät mit einer Abdeckungs-Verstellvorrichtung zur Veränderung der Abdeckung des hinteren Bildschirms hinsichtlich Größe und/oder Lage des verdeckten Abschnitts versehen.

Die Abdeckungs-Verstellvorrichtung kann hierbei grundsätzlich verschieden ausgebildet sein. Beispielsweise könnte eine vor dem verdeckten Bildschirm angeordnete Blende vorgesehen sein, die das Sichtfenster auf den hinteren Bildschirm begrenzt und verstellbar ausgebildet sein kann, um das Sichtfenster verändern zu können, beispielsweise vergrößert/verkleinert oder in ihrer Lage verändert werden kann, um die Größe des sichtbaren Bildschirmteils zu vergrößern/verkleinern oder zu verschieben. Vorzugsweise kann insbesondere eine bewegliche Lagerung für zumindest einen Bildschirm vorgesehen sein, mittels derer zumindest einer der Bildschirme relativ zu zumindest einem weiteren Bildschirm beweglich gelagert ist derart, dass die Abdeckung des hinteren Bildschirms hinsichtlich Größe und/oder Lage des verdeckten Abschnitts veränderbar ist. Durch Bewegen des Bildschirms in Richtung quer zur Sichtachse kann die Überdeckung der Bildschirme verändert werden, wodurch sich der zu sehende Abschnitt des hinteren, ganz oder teilweise verdeckten Bildschirms verändern lässt.

Insbesondere kann die Abdeckungs-Verstellvorrichtung eine Höhenverstellvorrichtung zur Verstellung der Höhe des hinteren, verdeckten Bildschirms relativ zu dem zumindest einen vorderen Bildschirm aufweisen. Hierdurch lässt sich insbesondere der sichtbare Bildausschnitt des verdeckten Bildschirms verändern. Alternativ oder zusätzlich kann die Abdeckungs-Verstellvorrichtung eine Höhenverstellvorrichtung zur Verstellung der Höhe zumindest eines vorderen Bildschirms relativ zu dem zumindest einen hinteren Bildschirm und vorzugsweise auch relativ zu dem weiteren vorderen Bildschirm aufweisen. Hierdurch kann insbesondere das Sichtfenster zwischen den beiden vorderen Bildschirmen auf den hinteren Bildschirm verschoben und auch vergrößert bzw. verkleinert werden, so dass der sichtbare Abschnitt des hinteren Bildschirms vergrößert und verkleinert werden kann und der hintere Bildschirm mehr oder weniger sichtbar gemacht wird. Die Abdeckungs-Verstellvorrichtung besitzt also vorteilhafterweise eine Abstandsverstellvorrichtung zum Auseinander-/Zusammenfahren zweier vorderer Bildschirme und Vergrößerung/Verkleinerung des zwischen den genannten zwei vorderen Bildschirmen gebildeten Sichtfensters auf den verdeckten hinteren Bildschirm.

In einfachster Ausbildung der Erfindung kann eine manuell betätigbare Verstellvorrichtung zur Verstellung der Lage der Bildschirme relativ zueinander vorgesehen sein, bspw. ein Schwenkhebel zum Auf- und Abfahren des hinteren Bildschirms. Vorzugsweise jedoch ist ein durch Fremdenergie betätigbarer Stellantrieb, vorzugsweise ein Elektromotor, zur Verstellung der Position zumindest eines Bildschirms relativ zu zumindest einem weiteren Bildschirm vorgesehen.

Die Steuerung der Bildschirmverstellung und damit des sichtbaren Abschnitts des hinteren Bildschirms kann in verschiedener Weise ausgebildet sein. Besonders vorteilhaft hinsichtlich der Erhöhung des Spielanreizes ist es, wenn in Weiterbildung der Erfindung die Steuereinrichtung Steuermittel zur automatischen Verstellung der Bildschirmabdeckung in Abhängigkeit des Spielablaufs aufweist. Hierdurch können insbesondere spezielle Spielabschnitte oder -vorgänge und besondere Spielsituationen durch Veränderung des sichtbaren Bereichs des verdeckten Bildschirms oder Bewegungen des genannten hinteren Bildschirms hervorgehoben werden, so dass die Aufmerksamkeit des Gerätenutzers auf den an sich nur begrenzt sichtbaren hinteren Bildschirm gelenkt wird.

Vorteilhafterweise können die Steuermittel Gewinnanzeigemittel zur Vergrößerung des sichtbaren Bildschirmausschnitts und/oder zyklischen Hin- und Herbewegung des verdeckten Bildschirms bei Erzielen eines Spielgewinns oder bei Erreichen einer entscheidenden Spielsituation beispielsweise kurz vor dem Stehenbleiben der Gewinnwalzen aufweisen. Wird beispielsweise der Jackpot des auf dem hinteren, verdeckten Bildschirm laufenden Spieles gewonnen, kann die Steuereinrichtung durch entsprechende Ansteuerung des Stellmotors oder der mehreren Stellmotoren den hinteren Bildschirm hin- und herrüttelnd bewegen und/oder die vorderen Bildschirme weiter auseinanderfahren, um den hinteren Bildschirm vorübergehend mehr oder ganz zu zeigen. Auch bei Auftreten anderer Spielsituationen kann die Verdeckung des hinteren Bildschirms oder dessen sichtbarer Bildausschnitt verändert werden, um einen Gerätebediener bestmöglich zu unterhalten, wobei beispielsweise auch vorgesehen werden kann, den verdeckten Bildschirm vorrübergehend ganz zu verdecken, beispielsweise wenn nach Starten eines neuen Spiels auf diesem Bildschirm vorübergehend eine weniger anregende Spielsituation dargestellt wird, und/oder wenn auf einem der vorderen Bildschirme gerade die entscheidende Spielphase erreicht wird, der die volle Aufmerksamkeit des Spielers zuteil werden soll.

Alternativ oder zusätzlich zu der genannten automatischen Steuerung der Bildschirmverdeckung kann das Spiel- und/oder Unterhaltungsgerät auch eine manuelle Steuerung der Abdeckungs-Verstellvorrichtung besitzen, wobei vorteilhafterweise ein von einem Gerätebediener betätigbares Eingabemittel, insbesondere eine geeignete Bedientaste, zur Verstellung der Bildschirmabdeckung vorgesehen ist. Hierdurch kann beispielsweise eine Vorwahl des zu sehenden Bildschirmabschnitts des verdeckten Bildschirms getroffen werden, die dann beispielsweise von der automatischen Steuerung je nach Spielsituation abgeändert wird. Es kann auch vorgesehen sein, dass die manuelle Steuerung sozusagen Priorität über die automatischen Steuermittel besitzt dahingehend, dass bei Betätigung der manuellen Eingabemittel ungeachtet der an sich erfolgenden automatischen Ansteuerung die relative Bildschirmanordnung zueinander die vom Spieler jeweils gerade gewünschte Anordnung angefahren wird.

Die manuellen Eingabemittel können dabei grundsätzlich verschiedene Ausprägungen haben. Um die Bedienbarkeit unabhängig von der Spielerposition zu fördern, kann in Weiterbildung der Erfindung vorgesehen sein, dass die Eingabemittel ein Fußpedal zur Verstellung der relativen Lage der Bildschirme zueinander aufweisen. Dabei kann nach einer Variante das Fußpedal vorteilhafterweise eine separat vom Gerätegehäuse ausgebildete Einheit bilden, die in verschiedenen Positionen relativ zum Gerätegehäuse am Boden platziert werden kann. Das Fußpedal erlaubt hierbei sozusagen nach Art einer Remote-Control eine Fernsteuerung der Bildschirmverdeckung von verschiedenen Punkten aus. Der Spieler kann die Pedalposition selbst wählen. Die Datenübertragung von dem Fußpedal an die Steuereinrichtung kann dabei per Kabel, aber auch kabellos, z. B. über eine Blue-Tooth-Schnittstelle, erfolgen. Durch ein solches bodennah angeordnetes Fußpedal kann eine beträchtlich bessere Gerätebedienung erreicht werden. Insbesondere ist der Spieler nicht mehr an das Bedienfeld mit den händisch betätigbaren Bedientasten gefesselt, er kann zurücktreten, beispielsweise um die Spielanzeige, insbesondere bei großflächigen Bildschirmen, aus größerer Entfernung zu betrachten, oder sich vor dem Spielgerät hin- und herbewegen und bleibt doch in Reichweite des Fußpedals, so dass er das Spielgerät betätigen kann. Zudem wird hierdurch der Spielanreiz beträchtlich erhöht, da das Spielgerät in vielfältigerer Weise bedienbar ist. Ein wesentlicher Vorteil ist weiterhin, dass auch körperlich beeinträchtigten Personen, insbesondere mit Beeinträchtigungen im Armbereich, die Gerätebedienung vereinfacht oder gar erst ermöglicht wird. Darüber hinaus können die Hände für andere Aufgaben wie Essen, Trinken oder Rauchen verwendet werden, ohne das Spiel unterbrechen zu müssen. Nach einer vorteilhaften Ausführung der Erfindung kann alternativ oder zusätzlich zu einem Fernbedienungs-Fußpedal auch ein Fußpedal am Gerätegehäuse an dessen Frontseite, vorteilhafterweise bodennah am unteren Abschnitt des Gerätegehäuses, angeordnet sein.

Vorteilhafterweise kann das Spielgerät auch ein Kniepedal zur Veränderung der Bildschirmverdeckung aufweisen. Hierdurch kann ein vor dem Spielgerät stehender oder auch auf einem entsprechenden Hocker sitzender Spieler die Abdeck-Verstellvorrichtung auch dadurch betätigen bzw. entsprechende Steuerbefehle auslösen, indem er durch Bewegung seines Knies gegen die im Kniebereich angeordnete Knietaste stößt. Hierdurch kann ggf. noch schneller reagiert werden, um kurzfristig den Bildschirm größer zu sehen, wenn dort ein interessantes Ereignis eintritt.

Alternativ zu einem solchen Fußpedal und/oder einem Kniepedal können die genannten Eingabemittel auch eine Handtaste und/oder einen Handhebel zur Verstellung der relativen Lage der Bildschirme zueinander aufweisen.

In Weiterbildung der Erfindung kann das Fußpedal und/oder das Kniepedal und/oder die Handtaste nicht nur zur Verstellung der Bildschirmüberdeckung vorgesehen sein, sondern auch zur Steuerung weiterer Gerätefunktionen dienen. Nach einer besonders vorteilhaften Ausführung der Erfindung kann dabei insbesondere vorgesehen sein, dass die Steuereinrichtung dem Fußpedal und/oder dem Kniepedal und/oder dem Handhebel zu verschiedenen Zeitpunkten eines Spiels verschiedene Steuerungsfunktionen zuordnet. Insbesondere kann das Fußpedal und/oder das Kniepedal und/oder die Handtaste vor einem Spiel oder bei einer Unterbrechung eines Spiels die Starttaste zur Aufnahme bzw. Wiederaufnahme des Spiels bilden. Läuft hingegen das Spiel, kann mit Hilfe des Fußpedals oder des Kniepedals oder des Handhebels die Bildschirmüberdeckung beeinflußt werden.

Um die Sichtbarkeit des verdeckt angeordneten Bildschirms trotz dessen versteckter Anordnung zu verbessern, ist in vorteilhafter Weiterbildung der Erfindung vorgesehen, dass dem hinteren verdeckten Bildschirm zumindest ein Spiegel zugeordnet ist, der bezüglich des Gerätebedienplatzes derart ausgerichtet und angeordnet ist, dass in dem Spiegel zumindest ein Teil des von dem Bildschirm erzeugten Bildes vom Gerätebedienplatz aus sichtbar ist. Vorteilhafterweise ist dabei der hintere verdeckte Bildschirm seitlich rechts und links von jeweils zumindest einem Spiegel eingefasst ist, der zur Bildschirmoberfläche des genannten verdeckten Bildschirms spitz- oder stumpfwinklig geneigt angeordnet ist. Hierbei kann insbesondere die tiefer im Gerätekorpus versenkte Anordnung des Bildschirms genutzt werden, um in dem zum Bildschirm führenden Sichtfenster bzw. -kanal dessen seitliche Wandungen mit Spiegeln zu versehen, die das vom verdeckten Bildschirm erzeugte Bild größer erscheinen lassen als es tatsächlich ist und/oder die Sichtachse auf an sich verdeckte Bildschirmabschnitte lenken, wodurch der tatsächliche sichtbare Bereich trotz der verdeckten Anordnung vergrößert wird.

Grundsätzlich können verschieden Monitore Verwendung finden, wobei die Bildschirme als Flachbildschirme, vorzugsweise als TFT-Monitore, ausgebildet sind. Dabei können verschiedene Bildschirme verschieden ausgebildet sein, wobei vorteilhafterweise alle Monitor TFT-Großbildmonitore sind und/oder das selbe Format aufweisen können.

Das Spiel- und/oder Unterhaltungsgerät ist nach einer Ausführung der Erfindung als sog. Stand-Alone-Gerät ausgebildet, wobei die Bildschirme in einem gemeinsamen Gerätegehäuse angeordnet sind, das frontseitig unter den Bildschirmen ein Bedienpaneel zur Betätigung und/oder Steuerung des Geräts aufweist.

Die Erfindung wird nachfolgend anhand bevorzugter Ausführungsbeispiele und zugehöriger Zeichnungen näher erläutert. In den Zeichnungen zeigen:
- Fig. 1:: eine Frontansicht eines elektronischen Glücksspielgeräts mit drei Bild- schirmen, von denen der mittlere teilweise verdeckt hinter dem vorderen unteren Bildschirm angeordnet ist, und
- Fig. 2:: eine schematische Seitenansicht des elektronischen Glücksspielgeräts aus Figur 1 in einem Längsschnitt, der die Hintereinanderstaffelung der Bildschirme zeigt.

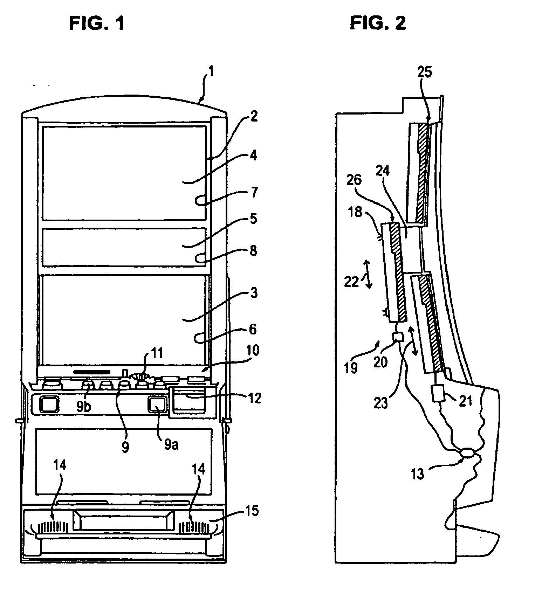

Das in Figur 1 gezeichnete Spielgerät bildet ein Standgerät in Form eines Stand-Alone-Geräts und umfasst ein etwa mannshohes, grob gesprochen kastenförmiges Gerätegehäuse 1, dessen obere Hälfte der Aufnahme einer Anzeigevorrichtung 2 dient, die in der gezeichneten Ausführung aus zwei großflächigen, übereinander angeordneten Bildschirmen 3 und 4 sowie einem dazwischen ausschnittsweise zu sehenden Bildschirm 5 besteht. Wie Figur 1 zeigt, besitzt das Spielgerätegehäuse 1 in seiner Frontseite 50 hierfür drei Ausschnitte 6, 7 und 60, die zueinander jeweils einen stumpfen Winkel einschließen, so dass die übereinander geordneten Bildschirme 3, 4 und 5 zueinander ebenfalls stumpfwinklig um eine liegende Achse zueinander gekippt sind, vgl. Fig. 2.

Unterhalb der Bildschirme 3, 4 und 5 besitzt das Spielgerätegehäuse 1 einen zum Spieler hin vorspringenden Bedienfeldabschnitt 60, der sich über die gesamte Breite des Gerätegehäuses 1 erstreckt und im Wesentlichen kastenförmig ausgebildet ist. Die Oberseite des Bedienfeldabschnittes 60 des Gerätegehäuses 1 ist etwa eben ausgebildet und beherbergt das Bedienfeld 10, welches mehrere von Hand zu betätigende Bedientasten 9 in Form von Druckschaltern umfasst. In der gezeichneten Ausführung sind die Bedientasten 9 mechanische Schalter, es versteht sich jedoch, dass die Bedientasten 9 auch nach anderen Wirkprinzipien betätigbar sein können, insbesondere Teil eines Touch Screens sein können. In an sich bekannter Weise kann der Bedienfeldabschnitt 60 weiterhin eine Geldeingabe- und/oder -ausgabeeinheit 11 umfassen, die in an sich bekannter Weise selbstverständlich verschieden ausgebildet sein kann und beispielsweise neben einem Münzen- und Geldscheinmodul auch ein Token- und/oder Ticketmodul oder ein elektronisches Kartenlese- und Schreibgerät umfassen kann.

Konkret besitzt das Bedienfeld 10 eine an der Frontseite des Bedienfeldabschnittes 60 neben einem Handgriff 12 angeordnete Starttaste 9a sowie auf der ebenen Oberseite mehrere Bedientasten, beispielsweise zum Erhöhen des Spieleinsatzes, zum Abrufen von Spielinformationen oder zum Steuern weiterer Spielfunktionen, sowie eine Bedientaste zur Verstellung der Lage des hinteren Bildschirms 5 relativ zu den anderen Bildschirmen 4 und 5.

Die auf den Bildschirmen 3, 4 und 5 angezeigten Spiele werden von einer elektronischen Steuereinrichtung 13 vorzugsweise in Form eines Rechners gesteuert, die im Inneren des Gerätegehäuses 1 in dessen unteren Hälfte aufgenommen ist. Die Steuereinrichtung 13 steuert einerseits die Anzeigevorrichtung 2 an und kommuniziert andererseits mit den Bedientasten 9 des Bedienfeldes 10. Es versteht sich, dass auch die Gewinnausgabeeinrichtung von der Steuereinrichtung 13 angesteuert wird.

Wie Figur 1 zeigt, besitzt das Spielgerät in der gezeichneten Ausführung zusätzlich zu den Handtasten des Bedienfeldes 10 zwei Fußpedale 14, die in der gezeichneten Ausführung an der Frontseite 5 des Gerätegehäuses 1 an dessen Bodenabschnitt angeordnet sind. Die beiden Fußpedale 14 sind dabei mit der Steuereinrichtung 13 verbunden, um auch per Fuß Steuerbefehle eingeben zu können, insbesondere die Verdeckung des hinteren Bildschirms 5 auch per Fuß verändern zu können.

Wie Figur 2 zeigt, sind die Bildschirme 3, 4 und 5 hintereinander versetzt und gestaffelt angeordnet, so dass der mittlere Bildschirm 5 sich teilweise hinter dem unteren Bildschirm 3 erstreckt und von diesem teilweise verdeckt wird. Dabei sind die beiden vorderen Bildschirme - grob gesprochen - in einer vorderen Bildschirmebene im Wesentlichen unmittelbar unter bzw. an der Frontseite 50 des Geräts angeordnet, während. der verdeckte Bildschirm 5 in Richtung der Blickachse auf den Bildschirm tiefer in den Gerätekorpus hinein versetzt angeordnet ist, so dass ein Teil seiner Bildschirmoberfläche in Richtung der Blickachse auf den Bildschirm hinter dem unteren Bildschirm 3 versteckt ist. Durch diese verdeckte Bildschirmanordnung kann trotz des ungewöhnlich schmalen (in Hochrichtung), jedoch breiten Sichtfensters bzw. Ausschnitts 8 ein normalformatiger Bildschirm verwendet werden. Vorteilhafterweise besitzen alle drei Bildschirme 3, 4, 5 dasselbe Format. Insbesondere können sie als Flachbildschirme beispielsweise in Form von TFT-Monitoren ausgebildet sein. In der gezeichneten Ausführung ist das Sichtfenster auf den mittleren Bildschirm 5 mehr als dreimal so breit wie hoch, während die Bildschirme 3, 4 und 5 einschließlich des durch das genannte Sichtfenster zu sehenden hinteren Bildschirms 5 ein Format besitzen, dessen Breite zwar größer als dessen Höhe ist, jedoch weniger als das zweifache der genannten Breite beträgt, vgl. Fig. 1 und 2.

Vorteilhafterweise können der hintere Bildschirm 5 und/oder der untere Bildschirm 3 höhenveränderbar gelagert sein, was beispielsweise jeweils durch eine Lagerung 18 in Form einer seitlichen Schiebeführung bewerkstelligt sein kann, die den jeweiligen Bildschirm seitlich am Gerätegehäuse oder einem festen Gestell bzw. Rahmen führt, so dass die Bildschirme 3 und 5 jeweils quer zur Sichtachse auf den jeweiligen Bildschirm, vorzugsweise etwa parallel zu der von Ihren Bildschirmoberflächen definierten Ebene verfahren werden können.

Eine Abdeckungs-Verstellvorrichtung 19 kann hierbei Stellmotoren 20 und 21 aufweisen, die den Bildschirmen 3 bzw. 5 und/oder deren Lagerungen 18 zugeordnet sind, um die Bildschirme motorisch verfahren zu können, wie dies die Pfeile 22, 23 in Figur 2 andeuten. Die Stellmotoren 20 und 21 können dabei in der eingangs genannten Weise von der Steuereinrichtung 13 in Abhängigkeit verschiedener Betriebsparameter des Geräts, insbesondere in Abhängigkeit des Spielverlaufs angesteuert und/oder durch die zuvor genante Bedientaste 9b und/oder das Fußpedal 14 betätigt werden, um das Sichtfeld auf den verdeckten Bildschirm 5 in der genannten Weise zu verändern.

Wie Figur 2 zeigt, ist dabei der hintere Bildschirm 5 bzw. das zwischen den beiden vorderen Bildschirmen 3 und 4 liegende Sichtfenster auf den hinteren Bildschirm 5 von seitlichen Spiegeln 24 eingefasst, die derart angeordnet und ausgerichtet sind, dass sie das vom Bildschirm 5 erzeugte Bild in den Bereich der Augen des Spielers auf dem vorgesehenen Gerätebedienplatz spiegeln, um von dort gesehen werden zu können. Auch der obere Abschnitt des Sichtfensters, der sozusagen die obere Fensterleibung bildet, kann mit einem Spiegel versehen sein, um die Sichtbarkeit auf den hinteren Bildschirm zu verbessern bzw. den Eindruck eines größeren Bildes zu vermitteln.

## Patentansprüche

1. Spiel- und/oder Unterhaltungsgerät, insbesondere münz- und/oder geldwertmäßig betätigbarer Glücksspielautomat und/oder Wettgerät, mit mehreren Bildschirmen (3, 4, 5) zur Darstellung von Informationen, insbesondere von Spielinhalten und/oder Spielinformationen, die zu einem Gerätebedienplatz hin ausgerichtet sind, sowie einer Steuereinrichtung (13) zur Ansteuerung der Bildschirme und/oder Steuerung von Spielabläufen, **dadurch gekennzeichnet, dass** zumindest einer der Bildschirme (5) von dem Gerätebedienplatz aus betrachtet hinter zumindest einem weiteren Bildschirm (3) teilweise verdeckt angeordnet ist und dessen vom Gerätebedienplatz aus sichtbarer Bildausschnitt außerhalb des weiteren Bildschirms (3) liegt.

2. Spiel- und/oder Unterhaltungsgerät nach dem vorhergehenden Anspruch, wobei zwei Bildschirme (3, 4) in einer vom Gerätebedienplatz aus betrachtet vorderen Bildschirmebene (25) übereinander angeordnet sind und der zumindest eine verdeckt angeordnete Bildschirm (5) in einer hinteren Bildschirmebene (26) hinter den beiden genannten vorderen Bildschirmen (3, 4) angeordnet ist, wobei die beiden vorderen Bildschirme (3, 4) voneinander beabstandet sind, so dass der hintere Bildschirm (5) durch ein Sichtfenster zwischen den beiden vorderen Bildschirmen (3, 4) abschnittsweise sichtbar ist.

3. Spiel- und/oder Unterhaltungsgerät nach einem der vorhergehenden Ansprüche, wobei zumindest zwei, vorzugsweise alle, Bildschirme (3, 4, 5) zueinander stumpfwinklig geneigt angeordnet und zum Gerätebedienplatz hin unterschiedlich gekippt sind.

4. Spiel- und/oder Unterhaltungsgerät nach einem der vorhergehenden Ansprüche, wobei eine Abdeckungs-Verstellvorrichtung (19) zur Veränderung der Verdeckung des hinteren Bildschirms (5) hinsichtlich Größe und/oder Lage des verdeckten Abschnitts vorgesehen ist, wobei die Abdeckungs-Verstellvorrichtung (19) eine bewegliche Lagerung (18) für zumindest einen Bildschirm (3, 5) aufweist, mittels derer zumindest einer der Bildschirme (3, 5) relativ zu zumindest einem weiteren Bildschirm (4) beweglich gelagert ist derart, dass die Verdeckung des hinteren Bildschirms (5) hinsichtlich Größe und/oder Lage des verdeckten Abschnitts veränderbar ist.

5. Spiel- und/oder Unterhaltungsgerät nach dem vorhergehenden Anspruch, wobei die Abdeckungs-Verstellvorrichtung eine Höhenverstellvorrichtung zur Verstellung der Höhe des hinteren, verdeckten Bildschirms relativ zu dem zumindest einen vorderen Bildschirm, und/oder eine Abstandsverstellvorrichtung zum Auseinander-/Zusammenfahren zweier vorderer Bildschirme (3, 4) und VergrößerungNerkleinerung des zwischen den genannten zwei vorderen Bildschirmen (3, 4) gebildeten Sichtfensters auf den verdeckten hinteren Bildschirm (5) aufweist.

6. Spiel- und/oder Unterhaltungsgerät nach einem der vorhergehenden Ansprüche, wobei ein Stellantrieb, vorzugsweise ein Elektromotor (20, 21), zur Verstellung der Position zumindest eines Bildschirms relativ zu zumindest einem weiteren Bildschirm vorgesehen ist.

7. Spiel- und/oder Unterhaltungsgerät nach einem der vorhergehenden Ansprüche, wobei die Steuereinrichtung (19) Steuermittel zur automatischen Verstellung der Bildschirmabdeckung in Abhängigkeit des Spielablaufs aufweist.

8. Spiel- und/oder Unterhaltungsgerät nach dem vorhergehenden Anspruch, wobei die Steuermittel Gewinnanzeigemittel zur Vergrößerung des sichtbaren Bildschirmausschnitts und/oder zyklischen Hin- und Herbewegung des verdeckten Bildschirms bei Erzielen eines Spielgewinns aufweisen.

9. Spiel- und/oder Unterhaltungsgerät nach einem der vorhergehenden Ansprüche, wobei ein von einem Gerätebediener betätigbares Eingabemittel, insbesondere Bedientaste (9b), zur Verstellung der Bildschirmabdeckung vorgesehen ist.

10. Spiel- und/oder Unterhaltungsgerät nach dem vorhergehenden Anspruch, wobei die Eingabemittel ein Fußpedal (14) zur Verstellung der relativen Lage der Bildschirme zueinander und/oder ein Kniepedal zur Verstellung der relativen Lage der Bildschirme zueinander mit dem Knie aufweisen.

11. Spiel- und/oder Unterhaltungsgerät nach einem der vorhergehenden Ansprüche 9 oder 10, wobei die Eingabemittel eine Handtaste (9b) und/oder einen Handhebel zur Verstellung der relativen Lage der Bildschirme zueinander aufweisen.

12. Spiel- und/oder Unterhaltungsgerät nach einem der vorhergehenden Ansprüche, wobei dem hinteren verdeckten Bildschirm (5) zumindest ein Spiegel (24) zugeordnet ist, der bezüglich des Gerätebedienplatzes derart ausgerichtet und angeordnet ist, dass in dem Spiegel (24) zumindest ein Teil des von dem Bildschirm (5) erzeugten Bildes vom Gerätebedienplatz aus sichtbar ist.

13. Spiel- und/oder Unterhaltungsgerät nach dem vorhergehenden Anspruch, wobei der hintere verdeckte Bildschirm (5) seitlich rechts und links von jeweils zumindest einem Spiegel (24) eingefasst ist, der zur Bildschirmoberfläche des genannten verdeckten Bildschirms spitz- oder stumpfwinklig geneigt angeordnet ist.

14. Spiel- und/oder Unterhaltungsgerät nach einem der vorhergehenden Ansprüche, wobei die Bildschirme (3, 4, 5) als Flachbildschirme, vorzugsweise als TFT-Monitore, ausgebildet sind.

15. Spiel- und/oder Unterhaltungsgerät nach einem der vorhergehenden Ansprüche, wobei die Bildschirme (3, 4, 5) in einem gemeinsamen Gerätegehäuse (1) angeordnet sind, das frontseitig unter den Bildschirmen (3, 4, 5) ein Bedienpaneel (10) zur Betätigung und/oder Steuerung des Geräts aufweist.

## Claims

1. A gaming machine and/or entertainment machine, in particular a slot machine and/or gambling machine operable by coins and/or by monetary equivalents, having a plurality of screens (3, 4, 5) for the presentation of information, in particular of game contents and/or game information, which are directed toward a machine operating position, and having a control device (13) for the control of the screens and/or for the control of game procedures, **characterized in that** at least one of the screens (5) is arranged partly hidden behind at least one further screen (3), viewed from the machine operating position, and has a screen section visible from the machine operating position which screen section is positioned outside said further screen (3).

2. A gaming machine and/or entertainment machine in accordance with the preceding claim, wherein two screens (3, 4) are arranged above one another in a screen plane (25) at the front viewed from the machine operating position and the at least one screen (5) arranged hidden is arranged in a rear screen plane (26) behind the two named front screens (3, 4), wherein the two front screens (3, 4) are spaced apart from one another so that the rear screen (5) is visible sectionally through as viewing window between the two front screens (3, 4).

3. A gaming machine and/or entertainment machine in accordance with one of the preceding claims, wherein at least two screens, preferably all screens (3, 4, 5), are arranged inclined at an obtuse angle to one another and are tilted differently toward the machine operating position.

4. A gaming machine and/or entertainment machine in accordance with one of the preceding claims, wherein a covering adjustment apparatus (19) is provided to change the hiding of the rear screen (5) with respect to the size and/or location of the hidden section; wherein the covering adjustment apparatus (19) has a movable support (18) for at least one screen (3, 5), by means of which at least one of the screens (3, 5) is movably supported relative to at least one further screen (4) such that the hiding of the rear screen (5) is changeable with respect to the size and/or location of the hidden section.

5. A gaming machine and/or entertainment machine in accordance with the preceding claim, wherein the covering adjustment apparatus has a vertical adjustment apparatus for the adjustment of the height of the rear, hidden screen relative to the at least one front screen and/or has a spacing adjustment apparatus for the moving apart/moving together of two front screens (3, 4) and for the increasing/decreasing in size of the viewing window onto the hidden rear screen (5) formed between the named two front screens (3, 4).

6. A gaming machine and/or entertainment machine in accordance with one of the preceding claims, wherein an actuating drive, preferably an electric motor (20, 21), is provided for the adjustment of the position of at least one screen relative to at least one further screen.

7. A gaming machine and/or entertainment machine in accordance with one of the preceding claims, wherein the control device (19) has control means for the automatic adjustment of the screen covering in dependence on the gameplay.

8. A gaming machine and/or entertainment machine in accordance with the preceding claim, wherein the control means have winnings display means for the increasing in size of the visible screen section and/or for the cyclic moving to and fro of the hidden screen on the achieving of game winnings.

9. A gaming machine and/or entertainment machine in accordance with one of the preceding claims, wherein an input means, in particular an operating button (9a), actuable by a machine operator, is provided for the adjustment of the screen cover.

10. A gaming machine and/or entertainment machine in accordance with the preceding claim, wherein the input means have a foot pedal (14) for the adjustment of the relative position of the screens to one another and/or a knee pedal for the adjustment of the relative position of the screens to one another using the knee.

11. A gaming machine and/or entertainment machine in accordance with one of the preceding claims 9 or 10, wherein the input means have a manual button (9b) and/or a manual lever for the adjustment of the relative position of the screens to one another.

12. A gaming machine and/or entertainment machine in accordance with one of the preceding claims, wherein at least one mirror (24) is associated with the rear hidden screen (5) and is aligned and arranged with respect to the machine operating position such that at least a part of the image generated by the screen (5) is visible in the mirror (24) from the machine operating position.

13. A gaming machine and/or entertainment machine in accordance with the preceding claim, wherein the rear hidden screen (5) is bordered to the right and to the left by at least one respective mirror (24) which is arranged inclined at an acute or obtuse angle to the screen surface of the named hidden screen.

14. A gaming machine and/or entertainment machine in accordance with one of the preceding claims, wherein the screens (3, 4, 5) are designed as flat screens, preferably as TFT monitors.

15. A gaming machine and/or entertainment machine in accordance with one of the preceding claims, wherein the screens (3, 4, 5) are arranged in a common machine housing (1) which has an operating panel (10) for the actuation and/or control of the machine at the front side beneath the screens (3, 4, 5).

## Revendications

1. Appareil de jeux et/ou de divertissement, notamment automate pour jeux de hasard actionnable par jetons et/ou monnaie et/ou appareil de paris, avec plusieurs écrans (3, 4, 5) destinés à l'affichage d'informations, notamment de contenus de jeu et/ou d'informations de jeux, qui sont dirigés vers un poste de commande de l'appareil, ainsi qu'avec un dispositif de commande (13) destiné à la commande des écrans et/ou à la commande de séquences de jeu, **caractérisé en ce que**, vu du poste de commande de l'appareil, au moins un des écrans (5) est disposé en partie de manière recouverte derrière au moins un autre écran (3), et présente une section d'écran étant visible du poste de commande de l'appareil et étant disposé hors de l'autre écran (3).

2. Appareil de jeux et/ou de divertissement selon la revendication précédente, deux écrans (3, 4) étant disposés l'un au dessus de l'autre à un niveau d'écran avant vu du poste de commande de l'appareil (25) et l'un des écrans disposés de manière recouverte (5) étant disposé à un niveau d'écran arrière (26) derrière lesdits deux écrans avants (3, 4), les deux écrans avants (3, 4) étant écartés l'un de l'autre de sorte que l'écran arrière (5) soit visible par section à travers une fenêtre d'inspection entre les deux écrans avants (3, 4).

3. Appareil de jeux et/ou de divertissement selon une quelconque des revendications précédentes, au moins deux écrans, de préférence tous (3, 4, 5) étant disposés de manière inclinée à angle obtus les uns par rapports aux autres et en porte-à-faux différent par rapport au poste de commande de l'appareil.

4. Appareil de jeux et/ou de divertissement selon une quelconque des revendications précédentes, un dispositif d'ajustage de recouvrement (19) étant prévu pour la modification du recouvrement de l'écran arrière (5) en matière de taille et/ou de position de la section recouverte, le dispositif d'ajustage de recouvrement (19) présentant une suspension mobile (18) pour au moins un écran (3, 5), à l'aide de laquelle au moins un des écrans (3, 5) est tourné sur paliers mobiles par rapport à au moins un autre écran (4) de sorte que le recouvrement de l'écran arrière (5) soit modifiable en matière de taille et/ou de position de la section recouverte.

5. Appareil de jeux et/ou de divertissement selon la revendication précédente, le dispositif d'ajustage de recouvrement présentant un dispositif de réglage de la hauteur pour régler la hauteur de l'écran arrière recouvert par rapport à au moins l'un des écrans avant, et/ou un dispositif de réglage de l'écartement pour écarter/rapprocher les deux écrans avant (3, 4) et pour augmenter/réduire la fenêtre d'inspection constituée entre lesdits deux écrans avants (3, 4) sur l'écran arrière recouvert (5).

6. Appareil de jeux et/ou de divertissement selon une quelconque des revendications précédentes, un mécanisme de commande, de préférence un moteur électrique (20, 21) étant prévu pour le réglage de la position d'au moins un écran par rapport à au moins un autre écran.

7. Appareil de jeux et/ou de divertissement selon une quelconque des revendications précédentes, le dispositif de commande (19) présentant des moyens de commande destinés à ajuster automatiquement le recouvrement d'écran en fonction du déroulement du jeu.

8. Appareil de jeux et/ou de divertissement selon la revendication précédente, les moyens de commande présentant des moyens d'affichage du gain pour agrandir la section d'écran visible et/ou le mouvement de va-et-vient cyclique de l'écran recouvert en cas d'obtention d'un gain du jeu.

9. Appareil de jeux et/ou de divertissement selon une quelconque des revendications précédentes, un moyen d'entrée actionnable par un utilisateur de l'appareil, notamment une touche de commande (9b), étant prévu pour ajuster le recouvrement de l'écran.

10. Appareil de jeux et/ou de divertissement selon la revendication précédente, les moyens d'entrée présentant une pédale à pied (14) pour régler la position relative des écrans l'un par rapport à l'autre et/ou une pédale à genou pour régler la position relative des écrans l'un par rapport à l'autre avec le genou.

11. Appareil de jeux et/ou de divertissement selon une quelconque des revendications précédentes 9 ou 10, les moyens d'entrée présentant une touche manuelle (9b) et/ou un levier manuel destiné à régler la position relative des écrans l'un par rapport à l'autre.

12. Appareil de jeux et/ou de divertissement selon une quelconque des revendications précédentes, au moins un miroir (24) étant affecté à l'écran recouvert arrière (5), qui est aligné et disposé par rapport au poste de commande de l'appareil de manière à ce que dans le miroir (24), au moins une partie de l'image générée par l'écran (5) soit visible à partir du poste de commande de l'appareil.

13. Appareil de jeux et/ou de divertissement selon la revendication précédente, l'écran recouvert arrière (5) étant bordé latéralement à droite et à gauche d'au moins un miroir respectif (24), qui est disposé de manière inclinée à angle aigu ou obtus par rapport à la surface d'écran dudit écran recouvert.

14. Appareil de jeux et/ou de divertissement selon une quelconque des revendications précédentes, les écrans (3, 4, 5) étant agencés comme écrans plats, de préférence comme moniteurs TFT.

15. Appareil de jeux et/ou de divertissement selon une quelconque des revendications précédentes, les écrans (3, 4, 5) étant disposés dans un boîtier d'appareil commun (1), qui présente un panneau de commande (10) à l'avant et au-dessous des écrans (3, 4, 5) pour l'actionnement et/ou la commande de l'appareil.
